# EUROPEAN PATENT APPLICATION

(11) **EP 4 663 675 A1**
(43) Date of publication of application: **17.12.2025**
(21) Application number: 25181571.8
(22) Date of filing: 09.06.2025
(51) Int. Cl.: C08G 18/10, C08G 18/18, C08G 18/32, C08G 18/42, C08G 18/44, C08G 18/65, C08G 18/66, C08G 18/76, D06N 3/14

(54) **BI-COMPONENT, SOLVENT-FREE POLYURETHANE COMPOSITION FOR PRODUCING IMITATION LEATHERS, BY SPRAY APPLICATION**

(30) Priority: 11.06.2024 IT 202400013312
(71) Applicant: C.O.I.M. S.p.A.- Chimica Organica Industriale Milanese, 20090 Buccinasco (Milano) (IT)
(72) Inventor: MAFFEIS, Mattia, I-26010 OFFANENGO (Cremona) (IT); LURAGHI, Andrea, I-26010 OFFANENGO (Cremona) (IT); CATTADORI, Roberto, I-26010 OFFANENGO (Cremona) (IT)
(74) Representative: Rambelli, Paolo

(57) **Abstract**

Process for the production of artificial leather comprising the spray application of a layer of polyurethane foam obtained by mixing and spraying a two-component, solvent-free polyurethane composition, comprising:
a component A comprising a polyester-based polyol and/or a polyester-polyester hybrid and/or a polycarbonate polyol and/or polybutadiene polyol (unsaturated or hydrogenated) or a mixture of two or more of these, a blowing agent, a catalyst and optionally a chain extender agent or a foam stabilizing agent, and
an isocyanate component B comprising an isocyanate or a mixture of isocyanates (based on MDI and its derivatives) and a polymeric or prepolymer polyol selected from a polyester polyol and/or a polyester-polyether hybrid and/or a polycaprolactone polyol and/or polycarbonate polyol and/or polybutadiene polyol (unsaturated or hydrogenated) or a mixture of two or more of these, and optionally a short-chain di- or poly-functional alcohol and/or an anti-hydrolysis agent,
and wherein the catalyst included in component A comprises a mixture of a gel catalyst and a blow catalyst.

## Description

The present invention relates to a polyurethane composition for the production of imitation leathers, particularly to a solvent-free, two-component composition suitable for application by spray technology and to its use in the production of imitation leathers.

Synthetic leather (also called faux leather, imitation leather or eco leather) is a fabric that is aesthetically similar to leather, but without animal derivation, more sustainable and "cruelty free".

Today, the artificial leather industry deals with the production of synthetic leather and microfiber leather for the production of footwear, for applications in the fashion industry, the automotive industry, for furnishing items and for sports equipment.

Polyvinyl chloride (PVC) imitation leather is extremely widespread, but since it tends to release harmful monomers on the skin over time, it is gradually disappearing in Europe to make room for polyurethane (PU) based leather, which complies with current legislation.

Specifically for this application, and in the context of this description, "artificial leather" or "imitation leather" is defined as an expanded microcellular polyurethane foam with a thickness ranging between 0.6 and 2 mm and a density between 300 and 550 g/m³ (referring only to the polyurethane layer and not to the finished product).

The term "microcellular" means a porosity with totally or partially closed cells, having a maximum size not exceeding 1000 microns, preferably from 1 to 100 microns and with a cell density between 1*10⁸ and 1*10¹⁰ cells/cm³, preferably between 5*10⁸ and 5*10⁹ cells/cm ³.

The most common method for the production of polyurethane-based imitation leather is that of "solvent casting" which involves the use of polyurethane resins dissolved in a solvent such as water, acetone or dimethylformamide (DMF). In all three cases, the evaporation of the solvent involves a high consumption of energy. Furthermore, as regards the resin dissolved in DMF, evaporation leaves solvent residues on the final product, a substance recognized by the European Union as carcinogenic and therefore increasingly limited in use.

More recently, the use of bi-component, solvent-free polyurethane compositions has been proposed, where the two components are mixed and reacted *in situ,* applying the mixture to the substrate by means of spray technology.

EP 4004272 B1 describes a process for the production of a DMF-free imitation leather support by spraying a layer of polyurethane obtained by mixing a bi-component formulation, in which the first component comprises a polyester-based or polyether-based polyol and the second component is an isocyanate partially reacted with polyesters or polyethers.

The EP 4004272 B1 process allows for a uniform layer to be obtained, without the need for leveling, by means of a specific spray deposition technology and movement of the spray head with respect to the substrate.

The present invention provides a chemical solution to the leveling problem, thanks to a specific formulation of the bi-component composition.

The primary purpose of this invention is to provide a two-component polyurethane composition, suitable for solvent-free spray application, the application of which does not require leveling operations.

The composition of the present invention, possibly coupled with the spray technology that is the subject of the aforementioned patent, provides a final product of imitation leather, obtained without the use of solvent, (thus reducing energy consumption and the use of harmful solvents) and provided with a polyurethane coating layer of uniform thickness.

### Summary of the invention

In view of the aforementioned purpose, the object of the invention is a process for the production of imitation leather comprising a substrate and at least one layer of polyurethane foam, preferably microcellular, obtained by mixing and spraying a two-component polyurethane composition, as defined in the following claims.

The aforementioned layer preferably has a thickness of 0.6 to 2 mm and a density of 300 to 550 kg/m ³.

The microcellular structure of the foamed layer of the imitation leather substantially differs from the structure of a flexible polyurethane foam, which generally has a density of 19 to 80 kg/m³. According to the invention, a two-component reactive system is used, as for polyurethane systems for footwear, which includes a polyol part (component A) with added catalysts, foaming agents, optional stabilizers and cross-linking agents, and an isocyanate part (component B).

An innovative aspect is the use of a specific catalytic part in component A; instead of using a single catalyst that promotes both reactions, as is commonly used, a mixture of catalysts was chosen to individually manage the polyurethane formation reaction (gel reaction) and the expansion reaction (blow reaction).

By appropriately dosing the catalysts, it is possible to optimally manage the growth and maturation of the polyurethane, making subsequent leveling unnecessary.

Another advantageous aspect lies in the choice of the foam stabilizing agent which, through the synergy generated with the catalytic mixture, allows for a stable polyurethane foam with a uniform thickness, but covered by a thin layer of compact polyurethane that gives the visual and tactile appearance of real leather.

In one embodiment, and particularly in the embodiment that contemplates the use of the preferred foam stabilizers (defined below), the imitation leather obtained or obtainable by the process of the invention has a microcellular expanded layer with a superficial (thin) skin with collapsed cells.

### Detailed description of the invention.

The polyurethane composition for artificial leathers with solvent-free spray technology is characterized by the presence of two components: component A and component B.

Component A comprises a polyester-based polyol and/or a polyether-polyester hybrid and/or a polycarbonate polyol and/or polybutadiene polyol (unsaturated or hydrogenated), a foam stabilizing agent, a blowing agent, and a catalyst system comprising at least one gel catalyst and a blow catalyst, distinct from the gel catalyst (at precise ratios) and optionally a chain extender and/or a cross-linking agent.

Preferably, component A includes:
a1) from 50.0 to 99.6% by weight of a polymeric polyol selected from the group consisting of polyester-based polyol and/or polyester-polyether hybrid, polycaprolactone polyol, polycarbonate polyol and/or polybutadiene polyol (unsaturated or hydrogenated) or mixtures of two or more of these,
a2) from 0.1 to 5.0% by weight of a foam stabilizing agent,
a3) from 0.2 to 5.0% by weight of a blowing agent,
a4) from 0.1 to 8.0% by weight of the aforementioned mixture of gel and blow catalysts,
a5) up to 20% by weight (0-20% by weight) of chain extender agent and/or
a6) up to 15% by weight (0-15% by weight) of cross-linking agent, wherein the percentage amount of the individual components, including the optional components, is chosen in such a way that their sum is equal to 100%.

Component B is the isocyanate component comprising an isocyanate or a mixture of isocyanates, and a polymeric or prepolymer polyol selected from a polyester polyol and/or a polyester-polyester hybrid and/or a polycaprolactone polyol and/or a polycarbonate polyol and/or a polybutadiene polyol (unsaturated or hydrogenated) or mixtures thereof and, optionally, a short-chain di- or poly-functional alcohol, i.e. having 1 to 10 carbon atoms and/or an anti-hydrolysis agent.

Preferably, component B includes:
b1) from 30 to 80% by weight of an isocyanate or a mixture of isocyanates based on diphenylmethane diisocyanate (MDI) or its derivatives,
b2) from 20 to 70% by weight of a polyester-based polyol and/or polyester-polyester hybrid and/or polycaprolactone polyol and/or polycarbonate polyol and/or polybutadiene polyol (unsaturated or hydrogenated) or a mixture of two or more of these,
b3) up to 10% by weight (0-10% by weight) of a short-chain di- or poly-functional alcohol and/or
b4) up to 5% by weight (0-5% by weight) of an anti-hydrolysis agent,
   in which the percentage amount of the individual components, including the optional components, is chosen in such a way that the sum is equal to 100%
   the percentage by mass of the NCO content is preferably between 5.0% and 30.0%, based on the weight of component B.

In a preferred embodiment, component A comprises a polyester-based polymeric polyol b1) with random substitution of the ester groups with ether groups with the ultimate aim of greatly reducing the viscosity of component A and thus promoting optimal dispersion on the substrate.

In one embodiment, the aforementioned polymeric polyol a1) is used as a single polyol of component A or in combination with a polyester polyol and/or polycaprolactone polyol and/or polycarbonate polyol and/or polybutadiene polyol (unsaturated or hydrogenated) in order to obtain the physical-mechanical performance necessary for the application of polyurethane artificial leathers.

Component A preferably has a viscosity at 25°C of less than or equal to 12000 mPas, determined by the ASTM D 445 method.

Component B preferably has a viscosity at 25°C of less than or equal to 6000 mPas, determined by the ASTM D 445 method.

In one embodiment, the polyol a1) of component A and the polyol b1) of component B is a polyester-based and/or polyester-polyether hybrid polyol formed by condensation of a mixture of one or more components such as succinic acid, glutaric acid, adipic acid, sebacic acid, dodecanedioic acid, cyclohexane acid, dimeric fatty acid, aromatic dicarboxylic acids with diethylene glycol, triethylene glycol, monoethylene glycol, 1,2-propanediol, 1,3-propanediol, dipropylene glycol, 2,2-dimethylpropanediol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxy pivalate, 2-methyl-1,3-propanediol, 3-methyl-1,5 pentanediol, 1,3-butylene glycol, cyclohexanedimethanol, glycerin, trimethylolpropane, polyethylene glycol with MW between 200 and 10000, polypropylene glycol with MW between 200 and 10000, polypropylene glycol capped with ethylene oxide with MW between 200 and 10000, polytrimethylene ether glycol with MW between 200 and 10000 or with epsilon-caprolactone or polycaprolactone with MW between 200 and 10000 or with polytetrahydrofuran with MW between 200 and 10000.

In one embodiment, the polycaprolactone polyol referred to in point a1) of component A and/or in point b1) of component B is obtained by opening the epsilon-caprolactone ring and subsequent polymerization with diols, short-chain triols and amines in the presence of a catalyst.

In one embodiment, the polycarbonate polyol mentioned in point a1) of component A and/or in point b1) of component B is obtained by the transesterification of dimethyl carbonate and mixtures of dicarbonate methyl esters with a glycol selected from diethylene glycol, triethylene glycol, monoethylene glycol, 1,2-propanediol, 1,3-propanediol, dipropylene glycol, 2,2-dimethylpropanol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxy pivalate, 2-methyl-1,3-propanediol, 3-methyl-1,5-pentanediol, 1,3-butylene glycol, cyclohexanedimethanol, glycerin and/or trimethylolpropane and mixtures thereof.

The cross-linking agent a6), if present in the composition, can be one or more mixtures of glycerin, trimethylolpropane, pentaerythritol, triethanolamine, and diethanolamine.

When used, its preferred concentration in A is from 0.5 to 15% by weight.

The chain extender agent a5), if present in the composition, performs the function of increasing the hard part of the polyurethane structure, allowing to increase and adjust the hardness of the material and the physical-mechanical properties such as tensile strength, elongation, shear strength and abrasion resistance, until the performance required by the application is achieved. It is preferably used in polyurethane formulations that provide medium or high hardness. It can be a compound selected from 3,3-dichloro-4,4-diphenylmethanediamine, 3,5-dimethylthiotoluenediamine, 3,5-diethyltoluenediamine, diethylene glycol, triethylene glycol, monoethylene glycol, 1,2-propanediol, 1,3-propanediol, dipropylene glycol, 2,2-dimethylpropanediol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxypivalate, 2-methyl-1,3-propanediol, 3-methyl-1,5-pentanediol, 1,3-butylene glycol and/or cyclohexanedimethanol or a mixture of two or more of these. If used, its preferred concentration in A is from 0.5 to 15% by weight.

The preferred blowing agent is water.

The foam stabilizing agents a2) in the composition are preferably mixtures of one or more components of polyether-based siloxanes, modified polybutadienes and organosilicon surfactants, combined in appropriate ratios.

The preferred stabilizing agents are organic polymers based on butadiene modified with alkyd groups and with antioxidant additives such as hindered phenols substituted with alkyd chain such as, but not limited to, 3-(3,5-di-tert-butyl-4-hydroxyphenyl) C7-9-alkyl propionate and isomers (such as TEGOSTAB^{®} B8948 supplied by Evonik), siloxane-modified polyethers such as polypropylene glycol-siloxane, polyethylene glycol-siloxane and/or polyethylene propylene glycol-siloxane (such as TEGOSTAB B8960^{®} or TEGOSTAB B8950^{®} supplied by Evonik).

The range of mixing weight ratios is preferably from (modified polybutadienes): (polyether-siloxanes) = 100:10 to (modified polybutadienes): (polyether-siloxanes) = 100:1000, preferably from (modified polybutadienes): (polyether-siloxanes) = 100:50 to (modified butadienes):(polyether-siloxanes)=100:200.

The catalysts present within the formulation of component A comprise at least one gel catalyst and at least one blow catalyst.

The term gel catalyst refers to a predominantly amine or metal catalyst (organo-metallic or metal-organo or inorganic salt) selective for the reaction between polyol and isocyanate prepolymer that allows the formation of polyurethane. This type of catalyst lowers the activation energy between the -NCO groups of the isocyanic prepolymer and the -OH groups of the polyol, increasing the reaction rate.

The term blow catalyst means an amine catalyst with selective action for the reaction between isocyanate and water that allows the generation of CO2 (in the gas phase) which allows the expansion of the polyurethane material. This type of catalyst allows to lower the activation energy of the reaction between the -NCO groups of the isocyanate and the water, increasing the speed of the same.

By appropriately dosing the two catalysts, it is possible to separately manage the two reactions of formation (gel reaction) and expansion (blow reaction) of the polyurethane. In this way, it is possible to optimally manage the growth and curing of the polyurethane, making subsequent leveling unnecessary.

The molar ratio between the gel catalyst and the blow catalyst is preferably between gel:blow=100:160 and gel:blow=100:1.5, more preferably between gel:blow=100:90 and gel:blow=100:2.5, depending on the type of gel and blow catalysts chosen and the type of spraying machine used (each type of mixing head and spray gun may require a specific ratio between gel and blow catalyst).

The gel catalysts present in component A are a mixture of one or more tertiary amines, possibly partially blocked with weak organic acids and diluted in various solvents such as liquid glycols at room temperature including, but not limited to, diethylene glycol, triethylene glycol, monoethylene glycol, 1,2-propanediol, 1,3-propanediol, dipropylene glycol, 1,4-butanediol, 1,5-pentanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, 2-methyl-1,3-propanediol, 3-methyl-1,5-pentanediol and/or 1,3-butylene glycol.

The preferred gel catalysts are N-methyl imidazole, triethylenediamine (1,4-diazabicyclooctane), 1,5-diazabicyclo(5.4.0)undec-7-ene, also in a mixture with 1,8-diazabicyclo[5.4.0]undec-7-ene, also partially blocked with weak organic acids such as 2-ethylhexanoic acid or with weak polymeric organic acids (such as DABCO BA100^{®} commercially available from Evonik) or a mixture of one or more of these compounds.

The use of a tertiary amine partially blocked by a weak organic acid is preferred as it allows the activation temperature of the gel catalyst to be managed according to the amount of blocking acid used.

The blow catalysts in component A are a mixture of one or more tertiary, secondary, or primary amine components, i.e., containing one or more tertiary, secondary, or primary amine groups within the same molecule. The presence of one or more primary or secondary amine groups allows the catalyst molecule, in addition to carrying out its catalytic role in the reaction between water and isocyanic groups, to also bind to the polyurethane structure during the reaction phase, making the blow catalyst action more homogeneous, with a consequent more regular expansion of the polyurethane material.

The preferred blow catalysts are N-[2-[2-(dimethylamino)ethoxy]ethyl]-N-methyl-1,3-propanediamine, N-[3-(dimethylamino)propyl]-N,N',N'-trimethylpropan-1,3-diamine and/or mixtures thereof.

The preferred gel and blow catalyst combinations are:
1. N-methyl imidazole /N-[2-[2-(dimethylamino)ethoxy]ethyl]-N-methyl-1,3-propanediamine with a preferable gel/blow molar ratio between 100:25 and 100:5.
2. N-methyl imidazole mixed with 1,4-diazabicyclooctane (preferred ratio between 50/50 and 70/30 in moles) / N-[3-(dimethylamino)propyl]-N,N',N'-trimethylpropan-1,3-diamine with a preferable gel/blow mole ratio between 100:15 and 100:3.
3. 1,4-diazabicyclooctane / N-[3-(dimethylamino)propyl]-N,N',N'-trimethylpropan-1,3-diamine with a preferable gel/blow molar ratio of between 100:10 and 100:2.5.
4. 1,4-diazabicyclooctane / N-[2-[2-(dimethylamino)ethoxy]ethyl]-N-methyl-1,3-propanediamine with a preferable gel/blow mole ratio between 100:30 and 100:5.
5. 1,5-diazabicyclo(5.4.0)undec-7-ene (also in a mixture with 1,8-diazabicyclo[5.4.0]undec-7-ene, also partially blocked) /N-[2-[2-(dimethylamino)ethoxy]ethyl]-N-methyl-1,3-propanediamine with a preferable gel/blow molar ratio of between 100:30 and 100: 10.
6. 1,5-diazabicyclo(5.4.0)undec-7-ene (also in a mixture with 1,8-diazabicyclo[5.4.0]undec-7-ene, also partially blocked) / N-[3-(dimethylamino)propyl]-N,N',N'-trimethylpropan-1,3-diamine with a preferable gel/blow mole ratio of between 100:30 and 100:10.

The isocyanic component b1) in the formulation of component B, is preferably a mixture of 2,4-diphenylmethane diisocyanate and 4,4-diphenylmethane diisocyanate (MDI) and/or oligomers and homopolymers of 4,4-diphenylmethane diisocyanate (modified MDI).

The short-chain alcohols b3), if present in the formulation of component B, preferably have 2 to 10 carbon atoms and a functionality of 2 or higher. These alcohols perform the function of increasing the hard part of the polyurethane structure, allowing to increase and adjust the hardness of the material and the physical-mechanical properties such as tensile strength, elongation, shear strength and abrasion resistance. They are preferably used in polyurethane formulations that provide medium or high hardness. They can be a mixture of one or more components selected from diethylene glycol, triethylene glycol, monoethylene glycol, 1,2-propanediol, 1,3-propanediol, dipropylene glycol, 2,2-dimethylpropanediol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxypivalate, 2-methyl-1,3-propanediol, 3-methyl-1,5-pentanediol, 1,3-butylene glycol, cyclohexanedimethanol, glycerin and/or trimethylolpropane. When used, their concentration in B is preferably from 0.3 to 10% by weight.

The anti-hydrolysis agents b4), if present in the formulation of component B, can be a mixture of carbodiimides and/or esters of oxalic acid and/or cyclic lactones and perform the function, if necessary, of increasing the resistance to hydrolysis of the polyurethane and therefore the durability of the material over time. They are preferably used in polyurethane formulations that provide for the possibility of reaction between water and the functional groups present in the chain, typically the ester groups (polycaprolactone or pure or hybrid polyester polyol) or the carbonate groups (polycarbonate polyol). When used, their concentration in B is preferably from 0.5 to 5% by weight.

The bi-component composition is preferably deposited on a conventional substrate for imitation leather (for example a fabric or a non-woven fabric) or on a release sheet by means of high or low pressure spray technology, preferably by means of the technology described by EP 4004272 B1, and the coating layer obtained is subjected to drying. If the deposit is made on a release sheet, a substrate for imitation leather is applied to the exposed side of the polyurethane coating, possibly using an adhesive, and the release sheet is removed.

The mixing weight ratio of component A/component B is preferably between 100:55 and 100:190. The ratio is calculated stoichiometrically as a function of the equivalent OH number of the polyol already added (component A) and of the NCO value of the isocyanic prepolymer (component B).

Further characteristics and advantages of the present invention will become apparent from the detailed description that follows and from the following examples of implementation provided by way of non-limiting example.

In the attached drawings:

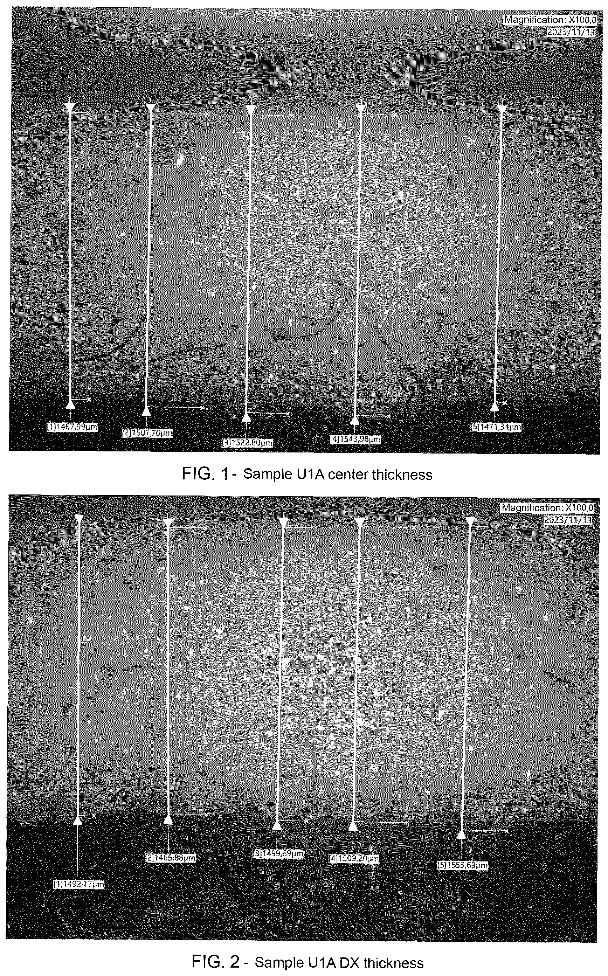

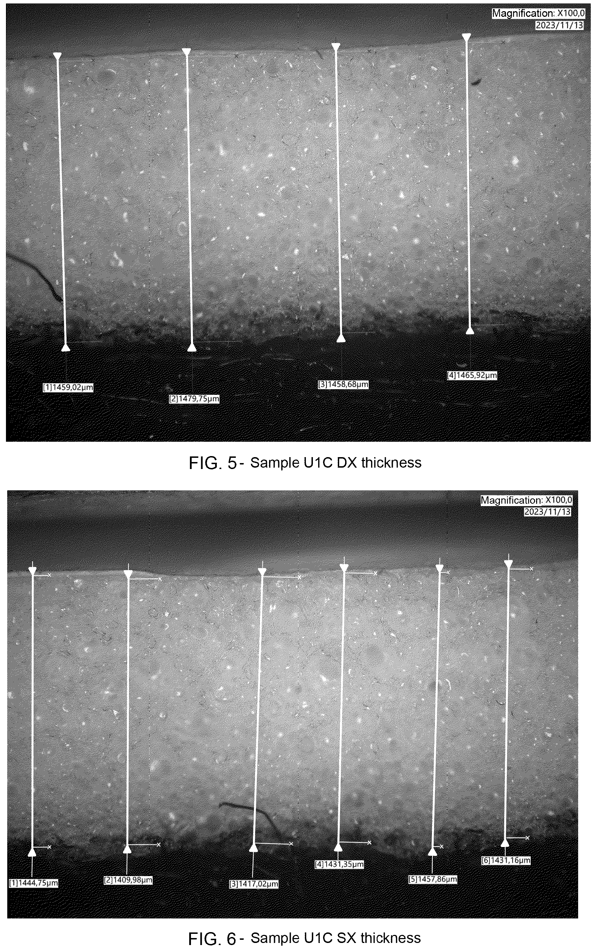

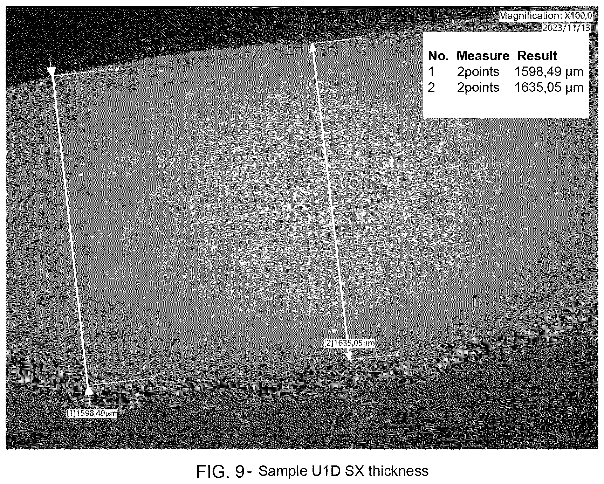

- Figures 1 to 9 are photographs with an X100 magnification electron microscope that illustrate the uniform thickness of the samples obtained according to the following examples.

### Example U1A

### (1) Polyol component A

A linear ester-ether hybrid polyol (F = 2.00) with molecular weight = 2000 (OHN = 56 mgKOH/g) at viscosity 25°C = 1500 - 2500 mPas composed of adipic acid, diethylene glycol and polypropylene glycol with molecular weight = 1000 was used as the polyol in component A.

### (2) Polyol component B

A linear polyester polyol (F = 2.00) with molecular weight = 2000 (OHN = 56 mgKOH/g) at viscosity 25°C = 5000 - 7000 mPas composed of adipic acid, 1,6-hexanediol, 2-methyl-1,3-propanediol and ethylene glycol was used as the polyol in component B.

### (3) Preparation of component A

In a container, weigh 100 kg of the ester-ether hybrid polyol of point (1), 10.56 kg of chain extender (monoethylene glycol), 1.64 kg of cross-linking agent (glycerin), 1.33 kg of blowing agent (water),

0.63 Kg of silicone-based foam stabilizing agent (polyethylene propylene glycol-siloxane), 2.48 Kg of gel catalyst (N-methylimidazole), 2.72 Kg of gel catalyst (33% triethylenediamine in monoethylene glycol), 0.35 Kg of blow catalyst (N-[3-(dimethylamino) propyl-N,N',N' trimethylpropan-1,3-diamine). Heat to 50°C and mix for 40 min.

Add 2% pigment (pink) and mix for another 15 min.

### 4) Preparation of component B

In a reactor, weigh 50.05 Kg of MDI and 3.83 Kg of modified MDI and allow to stir for about 30 min at 50°C in a nitrogen atmosphere. Then add 45.52 Kg of the polyester polyol described in point (2) and heat to 70 - 80°C for 2 hours. Add 0.60 Kg of anti-hydrolysis agent (diethyl-oxalate) and mix for 30 min at 60°C.
NCO = 16.04%
Viscosity 25°C = 1758 mPas

### 5) Preparation of synthetic leather without solvent.

Using the spray technology, mix component A with component B in a weight ratio of 100: 154 at the head of the machine.

### 6) Results

| | **U1A** |
|---|---|
| **Thickness*** (µm) | 1496.05 ± 31.62 |
| **Density** (g/cm ³) | 0.415 |
| **Bends** | > 300000 |

*the thickness refers only to the polyurethane layer and not to the support on which it was sprayed.

The photographs of figures 1 to 3 illustrate the uniform thickness of the coating layer obtained (center, right and left)

### Example U1C

### (1) Polyol component A

A branched ester-ether hybrid polyol (F = 2.50) with molecular weight = 2500 (OHN = 56 mgKOH/g) at viscosity 25°C = 3000 - 4000 mPas composed of adipic acid, neopentyl glycol, trimethylolpropane, glycerin, 3-methyl-1,5-pentandiol and polypropylene glycol with molecular weight = 1000 was used as the polyol in component A.

### (2) Polyol component B

A linear polycarbonate polyol (F = 2.00) at MW = 2000 (OHN = 56 mgKOH/g) at a viscosity of 25°C = 4000 - 6500 mPas composed of 1,6-hexanediol and 1,5-pentanediol was used as the polyol in component B.

### (3) Preparation of component A

In a container, weigh 100 kg of the ester-ether hybrid polyol of point (1), 10.69 kg of chain extender (monoethylene glycol), 0.79 kg of cross-linking agent (triethanolamine), 1.43 kg of blowing agent (water), 0.76 kg of silicone-based foam stabilizing agent (polypropylene glycol-siloxane), 3.16 kg of gel catalyst (1,4-diazabicyclooctane in crystals), 2.63 kg of gel catalyst (33% triethylenediamine in monoethylene glycol), 0.64 kg of blow catalyst (N-[2-[2-(dimethylamino) ethoxy] ethyl]-N-methyl-1,3-propanediamine). Heat to 50°C and mix for 40 min.

### (4) Preparation of component B

In a reactor, weigh 57.51 kg of MDI and 4.40 kg of modified MDI and allow to stir for about 30 min at 50°C in a nitrogen atmosphere. Then add 37.50 kg of polycarbonate polyol described in point (2), and heat to 70 - 80°C for 2 hours. Add 0.60 kg of anti-hydrolysis agent (diethyl-oxalate) and mix for 30 min at 60°C.
NCO = 19.01%
Viscosity at 25°C = 1048 mPas

### (5) Preparation of synthetic leather without solvent

Using the spray technology, mix component A with component B in a ratio of 100:126 at the head of the machine.

### (6) Results

| | **U1C** |
|---|---|
| **Thickness*** (µm) | 1431.03 ± 42.45 |
| **Density** (g/cm ³) | 0.433 |
| **Bends** | > 300000 |

*the thickness refers only to the polyurethane layer and not to the support on which it was sprayed.

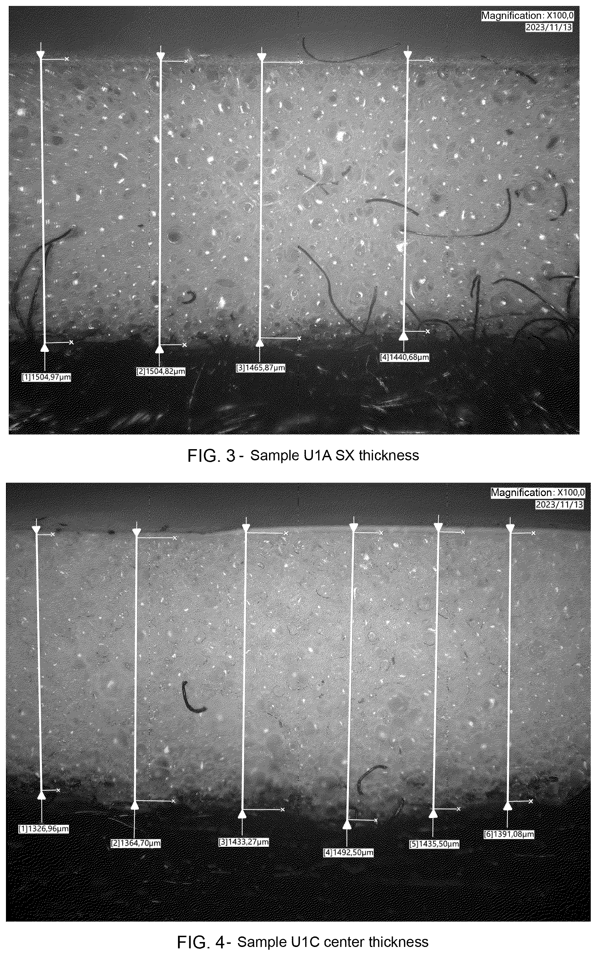

The photographs in figures 4 to 6 illustrate the uniform thickness of the coating layer obtained (center, right and left)

### Example U1D

### (1) Polyol component A

A linear ester-ether hybrid polyol (F = 2.00) with molecular weight = 2000 (OHN = 56 mgKOH/g) at viscosity 25°C = 1700 - 2700 mPas composed of sebacic acid, 1,3-propanediol, 1,4-butanediol and polypropylene glycol at MW = 400 was used as the polyol in component A.

### (2) Polyol component B

A linear polycaprolactone polyol (F = 2.00) with molecular weight = 2000 (OHN = 56 mgKOH/g) at viscosity 50°C = 4000 - 6000 mPas composed of epsilon-caprolactone and diethylene glycol was used as the polyol in component B.

### (3) Preparation of component A

In a container, weigh 100 kg of the ester-ether hybrid polyol of point (1), 9.00 kg of chain extender (7.87 kg monoethylene glycol + 1.13 kg of 1,4-butanediol), 1.08 kg of cross-linking agent (glycerin), 0.96 kg of blowing agent (water), 0.64 kg of silicone-based foam stabilizing agent (polyethylene propylene glycol-siloxane), 3.09 kg of gel catalyst (1,4-diazabicyclooctane in crystals), 2.50 kg of gel catalyst (33% triethylenediamine in monoethylene glycol), 0.54 kg of blow catalyst (N-[2-[2-(dimethylamino) ethoxy] ethyl]-N-methyl-1,3-propanediamine). Heat to 50°C and mix for 40 min.

### (4) Preparation of component B

In a reactor, weigh 57.51 kg of MDI and 4.40 kg of modified MDI and allow to stir for about 30 min at 50°C in a nitrogen atmosphere. Then add 37.50 kg of polycaprolactone polyol described in point (2), and heat to 70 - 80°C for 2 hours. Add 0.60 kg of anti-hydrolysis agent (diethyl-oxalate) and mix for 30 min at 60°C.
NCO = 19.06%
Viscosity at 25°C = 754 mPas

### (5) Preparation of synthetic leather without solvent.

Using spray technology, mix component A with component B in a ratio of 100:105 at the head of the machine.

### (6) Results

| | **U1D** |
|---|---|
| **Thickness*** (µm) | 1607.25 ± 31.27 |
| **Density** (g/cm ³) | 0.408 |
| **Bends** | > 300000 |

*the thickness refers only to the polyurethane layer and not to the support on which it was sprayed.

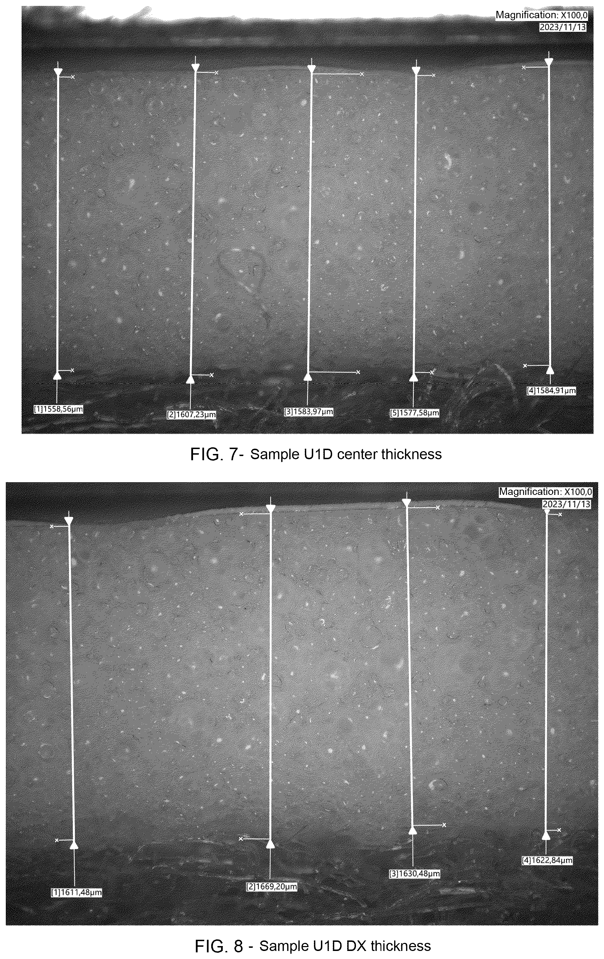

The photographs in figures 7 to 9 illustrate the uniform thickness of the coating layer obtained (center, right and left)

### Summary table of sample analysis.

| **Example** | **U1A** | **U1C** | **U1D** |
|---|---|---|---|
| **Thickness*** (µm) | 1496.05 ± 31.62 | 1431.03 ± 42.45 | 1607.25 ± 31.27 |
| **Density** (g/cm ³) | 0.415 | 0.433 | 0.408 |
| **Bends** | > 300000 | > 300000 | > 300000 |

*the thickness refers only to the polyurethane layer and not to the support on which it was sprayed.

As can be seen from the data shown in the table, the obtained imitation leather shows excellent resistance to bending (comparable to an artificial leather obtained with standard technologies), with a constant density between 0.40 and 0.45 g/cm ³. For all the examples shown, the thickness obtained is very constant over the entire section of the material (average variation less than 3%) despite the absence of mechanical leveling and the different thicknesses tested (from 1300 to 1600 µm). This is a clear indication of how the chemical technology developed allows for a uniform thickness coating layer without mechanical leveling.

## Claims

1. A process for the production of imitation leather comprising the spray application on a substrate of a layer of polyurethane foam having a density of between 300 and 550 kg/m ³, obtained by mixing and spraying a bi-component polyurethane composition, without solvent, comprising:
a component A comprising a polyester-based polyol and/or a polyester-polyester hybrid and/or a polycarbonate polyol and/or polybutadiene polyol (unsaturated or hydrogenated) or a mixture of two or more of these, a blowing agent, a catalyst and optionally a chain extender agent or a foam stabilizing agent, and
an isocyanic component B comprising an isocyanate or a mixture of isocyanates and a polymeric or prepolymer polyol chosen from a polyester polyol and/or a polyester-polyether hybrid and/or a polycaprolactone polyol and/or polycarbonate polyol and/or polybutadiene polyol (unsaturated or hydrogenated) or a mixture of two or more of these, and optionally a short-chain di- or poly-functional alcohol and/or an anti-hydrolysis agent,
and wherein the catalyst included in component A comprises a mixture of a gel catalyst and a blow catalyst.

2. The process according to claim 1, in which:
- component A includes:
a1) from 50.0 to 99.6% by weight of a polymeric polyol selected from the group consisting of polyester-based polyol and/or polyester-polyester hybrid, polycaprolactone polyol,
polycarbonate polyol and/or unsaturated or hydrogenated polybutadiene polyol or a mixture of two or more of these,
a2) from 0.1 to 5.0% by weight of a foam stabilizing agent,
a3) from 0.2 to 5.0% by weight of a blowing agent,
a4) from 0.1 to 8.0% by weight of the aforementioned mixture of gel and blow catalysts,
a5) up to 20% by weight of chain extender agent and/or
a6) up to 15.0% by weight of cross-linking agent,
wherein the percentage amount of the individual components, including the optional components, is chosen in such a way that their sum is equal to 100%,
- component B includes:
b1) from 30 to 80% by weight of an isocyanate or a mixture of isocyanates,
b2) from 20 to 70% by weight of a polyester-based polyol and/or a polyether-polyester hybrid and/or polycaprolactone polyol and/or polycarbonate polyol and/or unsaturated or
hydrogenated polybutadiene polyol,
b3) up to 10% by weight of a short-chain di- or poly-functional alcohol and/or
b4) up to 5% by weight of an anti-hydrolysis agent,
in which the percentage amount of the individual components, including the optional components, is chosen in such a way that their sum is equal to 100%,
the percentage by mass of the NCO content being between 5.0% and 30.0% referred to the weight of component B.

3. The process according to claim 1 or 2 wherein the polymeric polyol of component A comprises or consists of a polyester and/or a polyester-polyether hybrid, preferably with random substitution of the ester groups with ether groups, formed by condensation of a mixture of one or more acids selected from the group consisting of succinic acid, glutaric acid, adipic acid, sebacic acid, dodecanedioic acid, cyclohexane acid, dimeric fatty acid, aromatic dicarboxylic acids with a compound selected from the group consisting of diethylene glycol, triethylene glycol, monoethylene glycol, 1,2-propanediol, 1,3-propanediol, dipropylene glycol, 2,2-dimethylpropanediol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxypivalate, 2-methyl-1,3-propanediol, 3-methyl-1,5-pentanediol, 1,3-butylene glycol, cyclohexanedimethanol, glycerin, trimethylolpropane, epsilon-caprolactone, polycaprolactone with MW between 200 and 10000, polyethylene glycol with MW between 200 and 10000, polypropylene glycol with MW between 200 and 10000, polypropylene glycol capped with ethylene oxide with MW between 200 and 10000, polytetrahydrofuran with MW between 200 and 10000, polytrimethylene ether glycol with MW between 200 and 10000 or mixtures thereof.

4. The process according to any one of claims 1 to 3, wherein component A comprises a polycaprolactone polyol obtained by opening the epsilon-caprolactone ring and subsequent polymerization with short-chain diols or triols and amines in the presence of a catalyst, or
comprises a polycarbonate polyol obtained by transesterification of dimethyl carbonate and mixtures of dicarbonate methyl esters with a glycol selected from the group consisting of diethylene glycol, triethylene glycol, monoethylene glycol, 1,2-propanediol, 1,3-propanediol, dipropylene glycol, 2,2-dimethylpropanediol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxypivalate, 2-methyl-1,3-propanediol, 3-methyl-1,5-pentanediol, 1,3-butylene glycol, cyclohexanedimethanol, glycerin and/or trimethylolpropane and mixtures thereof.

5. The process according to any one of claims 1 to 4, wherein component A comprises a foam stabilizing agent comprising a mixture of one or more components selected from polyethers modified with siloxanes, preferably selected from polypropylene glycol-siloxane, polyethylene glycol-siloxane, polyethylene propylene glycol-siloxane and mixtures thereof, polybutadienes modified with alkyd groups, additives of antioxidants such as hindered phenyls substituted with alkyl chain, and organosilicon surfactants.

6. The process according to any one of claims 1 to 5 wherein component A comprises a chain extender agent a5) comprising a mixture of one or more compounds selected from 3,3-dichloro-4,4-diphenylmethanediamine, 3,5-dimethylthiotoluenediamine, 3,5-diethyltoluenediamine, diethylene glycol, triethylene glycol, monoethylene glycol, 1,2-propanediol, 1,3-propanediol, dipropylene glycol, 2,2-dimethylpropanediol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxypivalate, 2-methyl-1,3-propanediol, 3-methyl-1,5-pentanediol, 1,3-butylene glycol and/or cyclohexanedimethanol.

7. The process according to any one of claims 1 to 6, wherein component A comprises a cross-linking agent a6), comprising one or more compounds selected from the group consisting of glycerin, trimethylolpropane, pentaerythritol, triethanolamine, diethanolamine, and mixtures thereof.

8. The process according to any one of claims 1 to 7 wherein component B comprises a polyfunctional alcohol b3) having 2 to 10 carbon atoms, comprising a mixture of one or more components selected from the group consisting of diethylene glycol, triethylene glycol, monoethylene glycol, 1,2-propanediol, 1,3-propanediol, dipropylene glycol, 2,2-dimethylpropanediol, 1,4-butanediol, 1,5-pentanediol, 1,6-hexanediol, 1,9-nonanediol, 2-butyl-2-ethyl-1,3-propanediol, 1-n-propyl-2-ethyl-1,3-propanediol, 1-isopropyl-2,2-dimethyl-1,3-propanediol, neopentyl glycol hydroxypivalate, 2-methyl-1,3-propanediol, 3-methyl-1,5-pentanediol, 1,3-butylene glycol, cyclohexanedimethanol, glycerin and/or trimethylolpropane and mixtures thereof.

9. The process according to any one of claims 1 to 8 wherein the isocyanate component of component B is a mixture of 2,4-diphenylmethane diisocyanate and 4,4-diphenylmethane diisocyanate (MDI) and/or oligomers and homopolymers of 4,4-diphenylmethane diisocyanate.

10. The process according to any one of claims 1 to 9 wherein the anti-hydrolysis agent b4) of component B comprises a mixture of carbodiimides and/or oxalic acid esters and/or cyclic lactones.

11. Process according to any one of claims 1 to 10 wherein the gel catalyst comprises a tertiary amine optionally partially blocked by a weak organic acid.

12. Process according to any one of claims 1 to 11 wherein the gel catalyst comprises a compound selected from the group consisting of N-methyl imidazole, triethylenediamine (1,4-diazabicyclooctane), 5-diazabicyclo(5.4.0)undec-7-ene, optionally mixed with 1,8-diazabicyclo[5.4.0]undec-7-ene, optionally partially blocked with weak organic acids, preferably 2-ethylhexanoic acid.

13. Process according to any one of claims 1 to 12 wherein the blow catalyst is selected from the group consisting of N-[2-[2-(dimethylamino)ethoxy]ethyl]-N-methyl-1,3-propanediamine and/or N-[3-(dimethylamino)propyl]-N,N',N'-trimethylpropan-1,3-diamine, /or a mixture thereof.

14. The process according to any one of the preceding claims wherein the molar ratio between gel catalyst and blow catalyst is between 100:160 and 100:1.5, preferably between 100:90 and 100:2.5.

15. The process according to any one of the preceding claims, wherein the catalyst comprises one or more of the following combinations of gel catalyst and blow catalyst:
- N-methyl imidazole /N-[2-[2-(dimethylamino)ethoxy]ethyl]-N-methyl-1,3-propanediamine with a preferable gel/blow molar ratio between 100:25 and 100:5;
- N-methyl imidazole in a mixture with 1,4-diazabicyclooctane (preferred ratio between 50/50 and 70/30 in moles) / N-[3-(dimethylamino)propyl]-N,N',N'-trimethylpropan-1,3-diamine with a preferable gel/blow mole ratio between 100:15 and 100:3;
- 1,4-diazabicyclooctane / N-[3-(dimethylamino)propyl]-N,N',N'-trimethylpropan-1,3-diamine with a preferable gel/blow molar ratio of between 100:10 and 100:2.5;
- 1,4-diazabicyclooctane / N-[2-[2-(dimethylamino)ethoxy]ethyl]-N-methyl-1,3-propanediamine with a preferable gel/blow molar ratio of between 100:30 and 100:5;
- 1,5-diazabicyclo (5.4.0) undec-7-ene alone or in a mixture with 1,8-diazabicyclo [5.4.0] undec-7-ene, also partially blocked) /N-[2-[2-(dimethylamino)ethoxy]ethyl]-N-methyl-1,3-propanediamine with a preferable gel/blow molar ratio of between 100:30 and 100: 10;
- 1,5-diazabicyclo (5.4.0) undec-7-ene (also in mixture with 1,8-diazabicyclo [5.4.0] undec-7-ene, also partially blocked) / N-[3-(dimethylamino)propyl] - N,N',N'-trimethylpropan-1,3-diamine with a preferable gel/blow mole ratio between 100:30 and 100:10.
